# FASCICULE DE BREVET EUROPEEN

(11) **EP 2 694 442 B1**
(45) Date de publication et mention de la délivrance du brevet: **03.05.2017**
(21) Numéro de dépôt: 12711636.6
(22) Date de dépôt: 29.03.2012
(51) Int. Cl.: C02F 1/66, C02F 1/68, F24H 8/00

(54) **DISPOSITIF DE NEUTRALISATION DE CONDENSATS ACIDES**
VORRICHTUNG ZUR NEUTRALISIERUNG VON SAUREN KONDENSATEN
DEVICE FOR NEUTRALIZING ACID CONDENSATES

(30) Priorité: 07.04.2011 FR 1153048
(43) Date de publication de la demande: 12.02.2014
(73) Titulaire: Sauermann Industrie S.A., 77173 Chevry Cossigny (FR)
(72) Inventeur: CHAUVIN, Antoine, F-94500 Champigny sur Marne (FR)
(74) Mandataire: Vidon Brevets & Stratégie
(86) Numéro de dépôt international: PCT/EP2012/055734
(87) Numéro de publication internationale: WO 2012/136577

(56) Documents cités:
- EP-A1- 2 322 870
- DE-A1- 4 422 430
- DE-A1-102008 012 290
- DE-U1- 8 901 726

## Description

### 1. Domaine de l'invention

La présente invention concerne l'évacuation et le traitement des condensats acides, par exemple des condensats pouvant être produit dans les chaudières à condensation. L'invention concerne particulièrement le traitement de ces condensats, en vue de diminuer leur acidité.

### 2. Art antérieur

Les chaudières à condensation sont des chaudières à combustion de plus en plus utilisées, notamment pour le chauffage des habitations. Les chaudières de ce type, utilisant généralement comme combustible le gaz ou le fuel, ont la particularité de tirer profit de la chaleur latente de la vapeur d'eau contenue dans les gaz d'échappement, en condensant cette vapeur d'eau pour rejeter l'eau, appelée condensat, sous forme liquide. Ce procédé permet, sous certaines conditions, d'améliorer le rendement de la chaudière.

Du fait de la composition chimique des fumées produites lors de la combustion, les condensats résultant de la condensation de la vapeur d'eau contenue dans les fumées sont acides. Ils peuvent ainsi comprendre de l'acide sulfurique, et une faible quantité d'acide chlorhydrique et d'acide nitrique. Ainsi, les condensats issus des chaudières à condensation au gaz peuvent présenter un pH compris entre 3 et 5 et les condensats issus de chaudières à condensation au fuel un pH compris entre 2 et 4.

Ces condensats, après extraction de la chaudière, sont évacués dans les réseaux d'eaux usées. Cependant, leur acidité peut endommager les canalisations et est nuisible à l'environnement. Il est donc souhaitable, et dans certains cas obligatoire, de traiter ces condensats afin de diminuer leur acidité. Un tel traitement doit par exemple permettre de ramener les condensats à un pH proche du neutre.

Ce traitement est généralement effectué en amenant les condensats en contact avec des granulats capables de réagir avec l'acide pour le neutraliser, par exemple des granulats calcaires. Plusieurs dispositifs de ce type sont connus de l'art antérieur, par exemple du document FR 2 930 542 et du document DE8901726 U1.

### Inconvénients de l'art antérieur

Ces dispositifs connus présentent plusieurs inconvénients. D'une part, l'implantation à proximité des chaudières d'un circuit complexe d'évacuation de condensats, devant souvent comporter successivement une pompe de relevage, un siphon et un neutralisateur d'acidité, engendre un coût d'installation et un encombrement important, et un risque de disfonctionnement accru.

D'autre part, les dispositifs connus présentent une efficacité déclinant avec le temps, notamment du fait d'un embouage par des boues générées par la réaction des acides sur les granulats. Cet embouage peut parfois provoquer une perte d'efficacité voire un bouchage entraînant des fuites de condensats, pouvant générer des dégâts importants. Enfin, leur entretien, et notamment le remplacement annuel des granulats qu'ils contiennent, est compliqué, nécessitant de disposer de la recharge adaptée et imposant souvent un démontage du dispositif.

### 3. Objectifs de l'invention

La présente invention a pour objectif de palier ces inconvénients de l'art antérieur.

En particulier, la présente invention a pour objectif de fournir un dispositif de neutralisation de condensats acides qui permette de relever efficacement le pH des condensats.

Un objectif particulier de l'invention est de fournir, selon au moins certains de ses modes de réalisation, un tel dispositif dans lequel le risque d'accumulations des boues générées par la neutralisation de condensats acides est réduit.

Un autre objectif de l'invention est de fournir, selon au moins certains de ses modes de réalisation, un tel dispositif qui permet une simplification du circuit d'évacuation des condensats de la chaudière.

Encore un autre objectif de l'invention est de fournir un tel dispositif qui puisse être installé et entretenu facilement.

### 4. Exposé de l'invention

Ces objectifs, ainsi que d'autres qui apparaîtront plus clairement par la suite sont atteints à l'aide d'un dispositif de neutralisation de condensats acides, comprenant un bac de collecte de condensats et une cartouche renfermant un réactif de neutralisation des acides et présentant une ouverture d'entrée des condensats et une ouverture de sortie des condensats, dans lequel, selon l'invention, la cartouche est placée au moins en partie dans le bac, de façon que ladite ouverture de sortie se trouve en dessous d'un niveau minimum de liquide dans le bac.

Cette position de l'ouverture de sortie de la cartouche permet de former un siphon empêchant l'entrée de gaz dans la cartouche par l'ouverture de sortie. Enfin, le confinement des réactifs dans une cartouche, préférentiellement amovible, permet une maintenance facile du dispositif.

Selon un mode de réalisation avantageux, au moins une partie des réactifs contenus dans la cartouche est placée de façon à être en permanence en contact avec les condensats contenus dans le bac.

Ainsi, une part des réactifs peut continuer la réaction avec les condensats, si nécessaire, après le passage des condensats à travers la cartouche.

Préférentiellement, au moins une partie des réactifs contenus dans la cartouche est située au-dessus d'un niveau maximum de liquide dans le bac.

De cette façon, les condensats arrivant par l'ouverture d'entrée de la cartouche arrivent directement en contact avec les réactifs, sans avoir été dilués au préalable avec des condensats partiellement traités. Ce contact direct permet une meilleure efficacité de la réaction de neutralisation.

Selon l'invention, le dispositif de neutralisation comprend un dispositif de relevage des condensats collectés dans le bac, de façon à former une pompe de relevage de condensats.

Cela permet de réaliser dans un espace réduit le traitement et le relevage des condensats, le même bac étant utilisé pour les deux fonctions. Il est à noter également que ce mode de réalisation particulier permet une mise en oeuvre très facile de l'invention. Il suffit en effet de placer dans le bac de collecte d'une pompe de relevage de condensat, qui est connue en elle-même, une cartouche selon l'invention, et de connecter la canalisation d'arrivée de condensats à l'ouverture d'entrée de cette cartouche plutôt que de la faire déboucher directement dans le bac, pour réaliser un dispositif de neutralisation selon l'invention.

Il est ainsi possible de transformer très facilement et à moindre coût une pompe existante en un dispositif combinant les fonctions de relevage et de neutralisation. L'installation d'un dispositif de neutralisation indépendant devient alors inutile. Cette transformation n'était pas évidente pour l'homme du métier, qui considérait que la pompe et le dispositif de neutralisation constituaient des composants distincts du circuit d'évacuation des condensats.

Avantageusement, ce dispositif de relevage génère des mouvements de liquide dans le bac, de façon à contribuer au nettoyage de ladite ouverture de sortie de la cartouche et/ou des réactifs situés à proximité de ladite ouverture de sortie.

Ces mouvements, classiquement des variations de niveau de liquide dans le bac, permettent d'entraîner les boues vers le bas, et d'éviter leur accumulation en bas de la cartouche, pouvant causer le bouchage au moins partiel de celle-ci

Préférentiellement, le réactif contenu dans ladite cartouche est formé de granulats aptes à réagir avec les acides contenus dans le condensat pénétrant par ladite ouverture d'entrée pour les neutraliser.

L'utilisation de granulats permet un écoulement facile du liquide à travers la cartouche, et permet un contact entre ce liquide et une grande surface de réactif, Ces granulats peuvent par exemple être constitués de matériaux calcaires, comme du marbre concassé, ou être à base d'hydrolyte de magnésium.

De façon avantageuse, avant l'utilisation de la cartouche, la taille moyenne de ces granulats situés dans une portion inférieure de la cartouche est supérieure d'au moins 30 % à la taille moyenne des granulats situés dans une partie supérieure de la cartouche.

Ainsi, il est possible de combiner dans une même cartouche, lors de son remplissage, des granulats fins offrant plus de surface de contact avec le liquide, dans la portion supérieure, et des granulats plus gros présentant des interstices plus larges et risquant moins de boucher l'ouverture de sortie, dans la portion inférieure dans laquelle pourraient s'accumuler des boues résultant de la réaction entre les condensats et les granulats. Selon l'invention, la cartouche est placée sensiblement verticalement dans le bac, de façon à permettre un écoulement gravitaire des condensats à travers la cartouche.

Cette position de la cartouche permet un bon écoulement, limitant les risques d'accumulation de boues. De façon plus générale, une inclinaison de la cartouche supérieure à 45° par rapport à l'horizontale peut permettre un écoulement satisfaisant.

Selon un mode de réalisation avantageux, la cartouche est fabriquée au moins en partie en matériau transparent, de façon à permettre un contrôle visuel du réactif de neutralisation des acides qu'elle contient.

L'utilisateur peut ainsi contrôler visuellement que le niveau de réactif dans la cartouche reste au dessus d'un niveau indiqué. Il peut également détecter facilement d'éventuelles accumulations de boues dans la cartouche. Selon l'invention, la cartouche est montée de façon amovible sur une paroi supérieure du bac.

Ce montage permet une maintenance facile, par un remplacement de la cartouche quand le réactif qu'elle contient est consommé. Selon l'invention, au moins une partie de la cartouche s'étend au-dessus du niveau de ladite paroi supérieure.

Selon un mode de réalisation possible de l'invention, une partie de cartouche s'étendant au dessus du niveau de ladite paroi supérieure présente une section plus large que la partie de cartouche s'étendant en dessous de ladite paroi supérieure.

Ce montage permet de mettre en oeuvre une grande quantité de réactifs dans une même cartouche.

Avantageusement, la quantité de réactif dans ladite cartouche est telle que, avant utilisation, une partie du réactif s'étend au-dessus du niveau de ladite paroi supérieure.

Selon certains modes de réalisation, cette disposition des réactifs permet un contrôle visuel facile de la cartouche, qui doit être changée quand le niveau de réactif passe en dessous du niveau de cette paroi supérieure.

De préférence, la cartouche comporte des éléments de support venant en appui sur le fond dudit bac et permettant de maintenir ladite ouverture de sortie à distance dudit fond.

Cette disposition, et plus généralement le maintien de l'ouverture de sortie à distance du fond du bac, permet de limiter le risque de bouchage de l'ouverture de sortie de la cartouche.

Selon un mode de réalisation avantageux de l'invention, la cartouche comporte des moyens de déflection augmentant le chemin à parcourir pour les condensats, en contact avec ledit réactif de neutralisation, entre ladite ouverture d'entrée et ladite ouverture de sortie.

Ces moyens de déflection, ou déflecteurs, permettent d'augmenter les contacts entre les condensats et les réactifs, et d'augmenter ainsi l'efficacité de la neutralisation, principalement dans le cas de cartouches de grande largeur.

De façon préférentielle, la cartouche est configurée de façon à permettre l'écoulement gravitaire vers ladite ouverture de sortie de tout le liquide qui y pénètre par ladite ouverture d'entrée.

Cette configuration de la cartouche permet d'éviter tout accumulation de boues.

### 5. Liste des figures

La présente invention sera mieux comprise à la lecture de la description suivante de modes de réalisation préférés, donnés à titre illustratif et non limitatif, et accompagnés de figures, parmi lesquelles :
- la figure 1 est une vue de coupe simplifiée d'une pompe de relevage de condensats formant un dispositif de neutralisation selon un premier mode de réalisation de l'invention ;
- la figure 2 est une vue en coupe partielle d'une cartouche de neutralisation mise en oeuvre dans la pompe de la figure 1 ;
- la figure 3 représente un bouchon formant l'ouverture de sortie de la cartouche de la figure 2 ;
- la figure 4 est une vue en perspective d'une partie de la platine de fermeture du bac de la pompe de relevage de condensats de la figure 1 ;
- la figure 5 est une vue de coupe d'un dispositif de neutralisation de condensats selon un second mode de réalisation possible de l'invention ;
- la figure 6 est une vue en coupe d'une cartouche de neutralisation selon un autre mode de réalisation possible de l'invention ;
- la figure 7 est une vue en coupe d'une cartouche de neutralisation selon une variante du mode de réalisation de la figure 6;
- la figure 8 est une vue en perspective d'un déflecteur mis en oeuvre dans la cartouche de la figure 7.

### 6. Description d'un mode de réalisation de l'invention

### Fonctionnement de la pompe

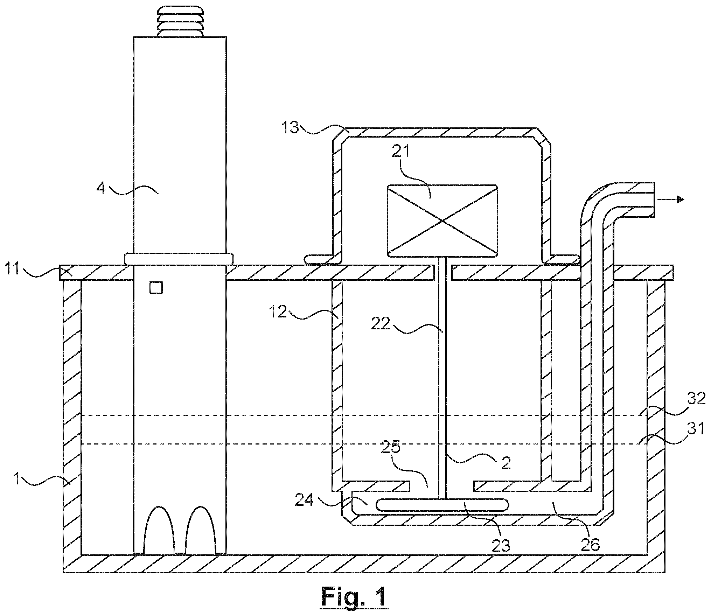

La figure 1 représente une pompe de relevage de condensats formant un dispositif de neutralisation selon un premier mode de réalisation de l'invention. Cette pompe comprend un bac 1 destiné à collecter les condensats et un dispositif de relevage 2 permettant l'évacuation des condensats collectés dans le bac.

Ce dispositif de relevage 2 comprend, dans l'exemple représenté, un moteur 21 entraînant en rotation un arbre 22 à l'extrémité duquel est assemblée une turbine 23. La turbine 23 est entraînée en rotation par le moteur dans une chambre 24 immergée dans le bac 1, et dans laquelle les condensats contenus dans le bac 1 peuvent pénétrer par une ouverture 25 située autour de l'arbre 22. La rotation de la turbine 23 repousse ces condensats vers un tuyau d'évacuation 26 s'ouvrant à la périphérie de la chambre 24, dans le plan de rotation de la turbine 23. Ainsi, le dispositif de relevage 2 permet d'évacuer les condensats du bac 1 par le tuyau d'évacuation 26, selon le principe bien connu des pompes centrifuges.

Le dispositif de relevage 2 est commandé en fonction du niveau de liquide dans le bac 1. Ce niveau peut être mesuré à l'aide d'un dispositif de mesure mettant en oeuvre un ou plusieurs flotteurs, ou par tout autre type de dispositif connu de l'homme du métier, comme par exemple un dispositif de détection capacitif ou résistif. Un système de commande met en marche et arrête le moteur 21 du dispositif de pompage 2 en fonction de la position des flotteurs, de telle sorte que le niveau de liquide dans le bac 1 reste toujours compris entre un niveau minimum 31 d'environ 40 mm et un niveau maximum 32 d'environ 60 mm, représentés en pointillés sur la figure 1. Ainsi, ce système de commande peut mettre en marche le moteur 21 quand le niveau de liquide dans le bac atteint le niveau maximum 32, qui sert de seuil de déclenchement de la pompe, et le maintenir en marche jusqu'à ce que le niveau de liquide redescende jusqu'au niveau minimum 31, qui sert de seuil d'arrêt de la pompe.

Le bac 1 est fermé par un couvercle, ou platine 11, qui forme la paroi supérieure du bac et qui porte une cage 12 ouverte, supportant la chambre 24 du dispositif de relevage. Par ailleurs, un capot 13 peut être assemblé sur la face supérieure de la platine 11 pour protéger le moteur 21, qui est monté sur cette platine 11.

### Cartouche de neutralisation

Selon l'invention, l'arrivée des condensats, provenant généralement d'une chaudière, dans le bac 1 de la pompe de relevage de condensats se fait au travers d'une cartouche de neutralisation 4, qui se trouve donc dans le prolongement de la conduite d'amenée des condensats dans le réservoir associé à la pompe.

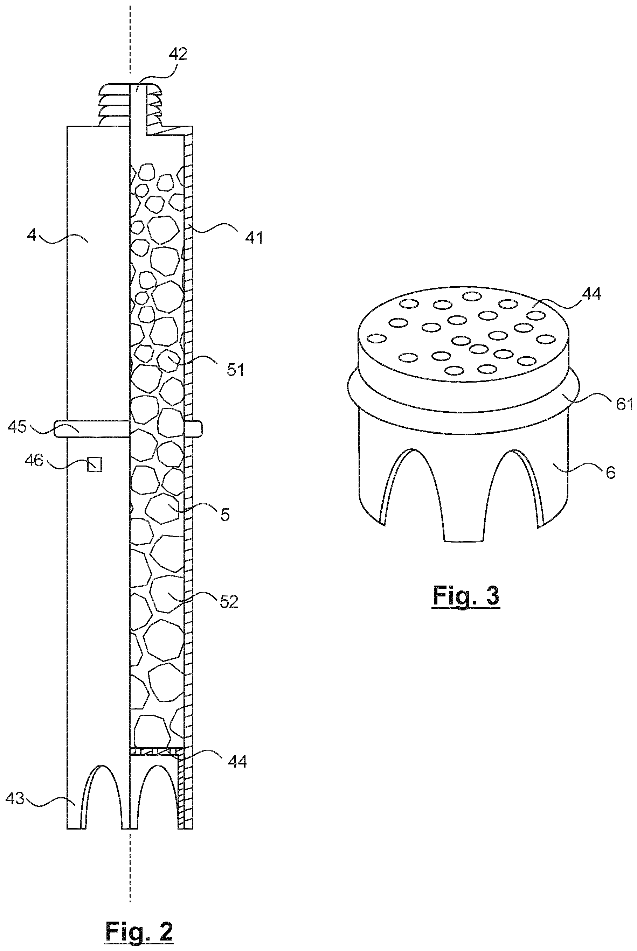

Cette cartouche de neutralisation 4 est représentée non coupée sur la figure 1, mais en coupe partielle sur la figure 2. Elle comporte un étui 41 qui, dans le mode de réalisation représenté, est sensiblement cylindrique, et qui présente à ces deux extrémités des ouvertures aptes à laisser passer des liquides. Cet étui 41 renferme une pluralité de granulats 5 aptes à réagir avec les acides afin de les neutraliser. Ces granulats peuvent être constitués de matériaux calcaires, comme du marbre concassé, ou par tout autre moyen de neutralisation connu de l'homme du métier, comme par exemple des granulats à base d'hydrolyte de magnésium.

L'étui 41 présente à son extrémité supérieure une ouverture d'entrée 42 pouvant avantageusement former un embout sur lequel peut être emmanché à force un tuyau ou un raccord souple. Cet étui 41 comprend également à son extrémité inférieure une ouverture de sortie constituée par une grille 44 empêchant le passage des granulats mais permettant la sortie de liquide. Cette grille 44 est maintenue à distance du fond du bac dans lequel est disposée la cartouche par des pieds de support 43, maintenant cette grille à une distance d'environ 10 mm de ce fond.

Selon un mode de réalisation avantageux de l'invention, cette grille 44 peut être formée dans un bouchon inférieur 6 de l'étui 41, représenté à la figure 3, conçu pour être monté à force à l'extrémité inférieure de cet étui 41. Un bossage périphérique 61 de ce bouchon 6 peut alors s'engager dans une rainure périphérique complémentaire formée sur la surface interne de l'étui 41, pour bloquer sa position.

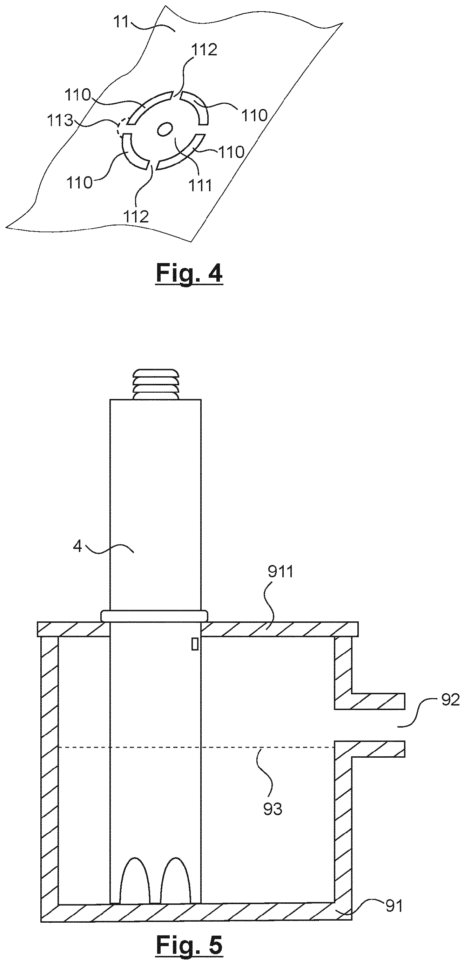

Comme le présente la figure 1, la cartouche de neutralisation 4 est conçue pour être placée verticalement, ou sensiblement verticalement, dans le bac 1, de façon à permettre un écoulement gravitaire des condensats. Cette cartouche de neutralisation 4 étant destinée à être remplacée régulièrement, elle est assemblée de manière amovible dans une ouverture de la platine 11. La platine 11, dont une portion est représentée à la figure 4, comprend en effet des pré-découpages 110 entourant une portion d'obturation 111, qui n'est reliée au reste de la platine que par des languettes 112. Cette portion d'obturation 111 peut être retirée facilement, en brisant les languettes 112, pour former dans la platine 11 une ouverture dont les dimensions, définies par les pré-découpages 110, correspondent au diamètre extérieur de la cartouche 4. L'ouverture formée permet ainsi l'introduction de la partie inférieure de la cartouche dans le bac 1 à travers la platine 11.

La cartouche de neutralisation 4 comporte un bossage périphérique 45 qui est destiné à venir en appui sur la surface supérieure de la platine 11, autour de l'ouverture définie par les pré-découpages 110. La distance entre ce bossage périphérique 45 et l'extrémité inférieure de la cartouche 4 est avantageusement définie de telle sorte que cette extrémité inférieure, formée par les pieds 43, soit en contact avec le fond du bac 1 ou proche de celui-ci quand le bossage 45 est en contact avec la platine 11.

Par ailleurs, un ou plusieurs plots 46 sont formés sur la cartouche 4 en dessous du bossage périphérique 45. Ces plots peuvent pénétrer dans l'ouverture définie par les pré-découpages 110 de la platine, en passant par des encoches 113 apparaissant à la périphérie de l'ouverture et résultant de la rupture des languettes 112. L'une de ces encoches est représentée en pointillés sur la figure 4. Une fois ces plots 46 introduits dans le bac 1, et le bossage 45 en appui sur la surface supérieure de la platine 11, un pivotement de la cartouche 4 selon son axe longitudinal permet d'éloigner les plots 46 des encoches 113, et de placer ces plots 46 en appui sur la surface inférieure de la platine 11 de manière à bloquer le coulissement longitudinal de la cartouche 4 par rapport à la platine 11. Ce blocage amovible de la cartouche 4 sur la platine 11 est particulièrement aisé à mettre en oeuvre et ne nécessite que peu d'adaptation sur le matériel existant à ce jour.

### Fonctionnement de la neutralisation

Une fois la cartouche 4 assemblée au bac 1, une conduite d'arrivée de condensats peut être assemblée sur l'ouverture d'entrée 42 de cette cartouche. Les condensats acides, provenant par exemple d'une chaudière, arrive ainsi par l'extrémité supérieure de la cartouche 4, et vient ruisseler sur des granulats 5. Lors de ce contact direct, les condensats acides réagissent avec la surface des granulats 5, générant une réaction chimique d'oxydoréduction, ce qui a pour effet de diminuer leur acidité.

Il est à noter que le fait que les condensats rentrent directement en contact avec les granulats émergés, sans être au préalable dilués dans un liquide dans lequel seraient immergés ces granulats, assure une meilleure efficacité de neutralisation des acides.

Pour augmenter l'efficacité de la neutralisation des acides, il est prévu selon un mode de réalisation préférentiel de l'invention que les granulats 51 situés dans une portion supérieure de la cartouche 4 forment des petits grains, par exemple de diamètres compris entre 2 et 3 mm, afin d'augmenter les surfaces de contact entre les condensats et les granulats.

La réaction chimique entre les condensats et les granulats peut former des boues qui risquent de boucher les interstices entre les granulats et ainsi de boucher la cartouche 4. Par ailleurs, les granulats diminuant de diamètre au fur et à mesure de leur usure au contact avec les acides, peuvent risquer de boucher les trous de l'ouverture de sortie de la cartouche. Pour éviter un tel bouchage qui entraînerait des conséquences dommageables, tels que des risques de fuite des condensats et une mauvaise évacuation des condensats, il est prévu, selon un mode de réalisation avantageux de l'invention, que les granulats 52 placés dans une portion inférieure de la cartouche 4 forment des gros grains, par exemple de diamètre de l'ordre de 5 à 6 mm. Ces gros grains, qui présentent de préférence un diamètre au moins double de celui des trous de l'ouverture de sortie, ne risquent pas de boucher ces trous et forment entre eux des interstices importants permettant un bon écoulement des boues générées par la réaction chimique entre les acides et les granulats.

De façon avantageuse, ces gros grains sont de dimensions moyennes supérieures aux dimensions moyennes des granulats 51 placés dans la portion supérieure de la cartouche 4, avant même l'utilisation de la cartouche. Les grains fins placés dans la portion supérieure de la cartouche permettent ainsi, pour un volume égal de granulats, une plus grande surface de contact entre le condensant et les granulats. Il est cependant important que les grains fins ne présentent pas un diamètre inférieur au dixième des diamètres des gros grains, afin qu'ils ne s'écoulent pas dans les interstices des gros grains.

La combinaison de gros grains dans une portion inférieure de la cartouche, par laquelle sort le liquide, et de grains plus fins, préférentiellement d'au moins 30 %, dans une portion supérieure de la cartouche, par laquelle entre le liquide, permet donc d'assurer à la fois une meilleure efficacité de la neutralisation des acides et une réduction du risque d'embouage du dispositif de neutralisation. Il est à noter qu'une telle cartouche présentant des granulats dont la taille moyenne dans une portion d'entrée de ladite cartouche étant inférieure à la taille moyenne des granulats situés dans une portion inférieure de ladite cartouche, pourrait être avantageusement utilisée dans d'autres types de dispositifs de neutralisation de condensats que celui de l'invention.

Comme le représente la figure 1, le bas de la cartouche de neutralisation 4 est situé au-dessous du niveau minimum 31 de liquide dans le bac 1. Ce niveau minimum correspondant au niveau d'arrêt de la pompe, il y a en permanence une quantité de liquide minimale dans le réservoir, correspondant à ce niveau minimal. De cette façon, les granulats situés en bas de la cartouche sont en permanence immergés. Le niveau de liquide dans le bac 1 variant régulièrement entre son niveau inférieur 31 et son niveau supérieur 32, cette variation de niveau engendre un déplacement de liquide assurant le lavage régulier des granulats situés en bas de la cartouche, ce qui limite les risques d'embouage.

Par ailleurs, une partie inférieure des granulats restant en permanence en contact avec les condensats contenus dans le bac, la réaction entre ces granulats et les condensats peut se poursuivre, si les condensats contenus dans le bac sont encore acides.

Selon une autre solution de neutralisation possible, qui n'est pas représentée et ne fait pas l'objet des revendications, la cartouche 4, peut d'ailleurs être placée dans le bac pour neutraliser les condensats qu'il contient, sans être traversée par les condensats pénétrant dans le bac.

Cette solution de neutralisation peut se faire avec une cartouche telle que décrite dans les différents modes de réalisation de la présente demande (dans laquelle l'ouverture d'entrée de condensats ne serait cependant pas nécessaire). Elle peut être mise en oeuvre en complément de l'utilisation, selon l'invention telle que décrite dans la présente demande, d'une autre cartouche traversée par les condensats, ou être en oeuvre indépendamment, par exemple dans le cas d'un débit faible de condensats ne nécessitant pas une grande efficacité de neutralisation.

Ainsi, cette solution de neutralisation, qui ne fait pas l'objet des revendications mettrait en oeuvre un dispositif de neutralisation de condensats acides, comprenant un bac de collecte de condensats et une cartouche renfermant un réactif de neutralisation des acides et présentant une ouverture perméable aux liquides mais bloquant le réactif, ladite cartouche étant placée au moins en partie dans ledit bac de façon que ladite ouverture se trouve en dessous d'un niveau minimum de liquide dans ledit bac, et éloignée du fond du bac.

Cette solution de neutralisation présenterait l'avantage, par rapport aux solutions de l'art antérieur, d'éviter l'accumulation de boues avec les granulats, les boues pouvant tomber dans le bac du fait de la distance entre le fond du bas et l'ouverture de sortie de la cartouche, et d'offrir une neutralisation sur une longue durée, du fait de la grande quantité de granulats pouvant être contenus dans la cartouche. Par ailleurs, la disposition des granulats en cartouche faciliterait leur remplacement lors d'opérations de maintenance.

Dans le mode de réalisation de l'invention représenté par la figure 1, l'ouverture (ou les ouvertures, le cas échéant) de sortie de la cartouche 4 est située en dessous du niveau minimum du liquide 31 dans le bac 1, et est donc en permanence immergée. Ainsi, le dispositif de neutralisation selon l'invention forme un siphon permettant d'éviter des remontées de gaz dans la chaudière par les conduites d'évacuation des condensats. Un tel siphon est généralement nécessaire sur les conduits d'évacuation de condensats des chaudières à condensation. Le dispositif de neutralisation de condensats selon l'invention assurant cette fonction, il rend superflue l'installation d'un siphon supplémentaire sur le conduit, et permet ainsi une simplification de l'installation de la chaudière. Par ailleurs, le bac 1 contenant une grande quantité de liquide, le risque qu'il s'assèche est faible. Le dispositif de neutralisation selon l'invention forme donc un siphon particulièrement performant.

La réaction chimique entre les acides et les granulats entraîne une destruction progressive de ces granulats. En conséquence, il est nécessaire, pour conserver une bonne efficacité de neutralisation des acides, de remplacer ces granulats régulièrement, par exemple chaque année. De façon avantageuse, l'étui 41 de la cartouche de neutralisation 4 est fabriqué en un matériau transparent, par exemple un plastique transparent. Ainsi, il est possible à l'utilisateur de contrôler le niveau de granulats dans la partie de la cartouche 4 dépassant au-dessus de la platine 11. L'utilisateur peut ainsi savoir, par un simple contrôle visuel ne nécessitant pas de démontage, à quel moment remplacer la cartouche 11 pour maintenir un bon niveau de neutralisation. Il peut par exemple être recommandé de remplacer cette cartouche quand le niveau des granulats descend au-dessous de la platine 11 (contrôle visuel sans démontage).

Le remplacement des granulats peut être fait de façon très simple et rapide en démontant la cartouche 4 et en la remplaçant par une cartouche neuve. Le modèle de cartouche peut avantageusement être standardisé pour les différents modèles de pompes et de neutralisateurs de condensats.

Dans le mode de réalisation décrit en relation avec la figure 1, le dispositif de neutralisation selon l'invention forme une pompe de relevage de condensats. Cette intégration dans la pompe de la cartouche procure un avantage de compacité de simplification du montage. Bien évidemment, si ce mode de réalisation met en oeuvre une pompe de type centrifuge, tout autre type de pompe connue par l'homme du métier peut bien sûr être mise en oeuvre comme par exemple une pompe à piston oscillant, péristaltique, à membrane, etc...

### Autre mode de réalisation

La figure 5 représente un mode de réalisation alternatif de l'invention, pouvant être mis en oeuvre dans les systèmes dans lesquels l'évacuation des condensats acides se fait de façon gravitaire, sans qu'il soit nécessaire d'effectuer un relevage par une pompe. Comme le montre la figure 5, le système de neutralisation comprend un bac 91 fermé par une platine 911. Une cartouche 4, identique à celle mise en oeuvre dans la pompe de relevage de condensats de la figure 1, est assemblée à la platine 911, par exemple avec un assemblage identique à celui mis en oeuvre entre la cartouche 4 et la platine 11. de la même façon que l'assemblage de cette cartouche à la platine 11.

Le bac 91 présente une ouverture 92 permettant l'évacuation des condensats collectés dans le bac 91. La hauteur de cette ouverture 92 est choisie de façon à ce que le niveau de liquide 93, représenté en pointillés sur la figure 5, reste en permanence au-dessus de l'ouverture inférieure de la cartouche 4. Ainsi, ce système de neutralisation représenté à la figure 5 permet d'assurer simplement une neutralisation efficace de l'acide et un siphon permettant d'éviter les remontées gazeuses dans le corps de chauffe de la chaudière. Par ailleurs, la maintenance de ce dispositif de neutralisation d'acide est particulièrement simple, comme dans le mode de réalisation représenté à la figure 1.

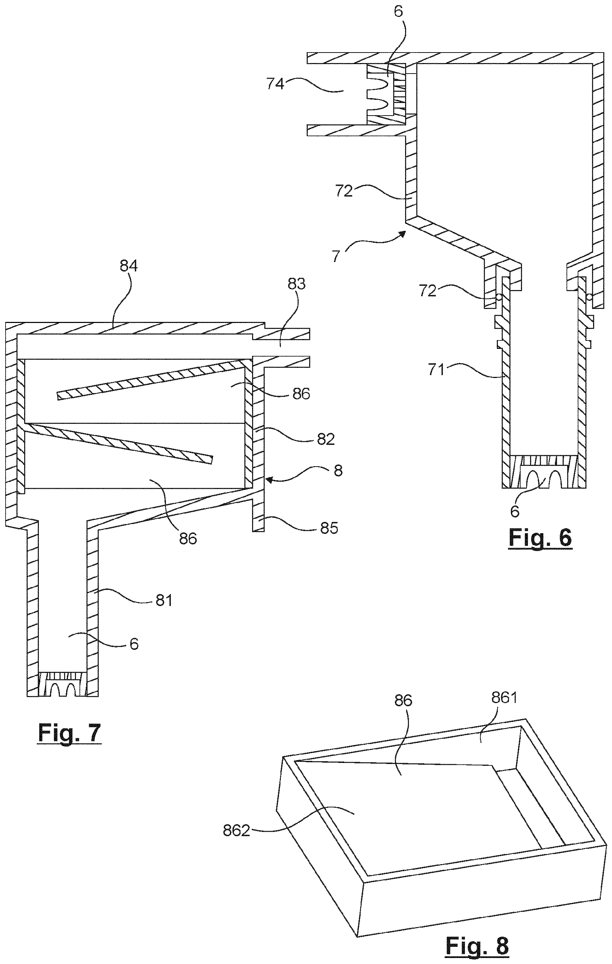

Selon d'autres modes de réalisation possibles de l'invention, la cartouche de neutralisation peut présenter une forme différente. Il est par exemple possible que la partie supérieure de cette cartouche, destinée à rester au-dessus de la platine 11, présente des dimensions plus importantes pour contenir plus de granulats, la partie inférieure de la cartouche étant identique à celle qui est représentée à la figure 2 pour rester compatible avec le bac 1 et la platine 11. Les figures 6 à 8 représentent ainsi deux modes de réalisation possibles de l'invention permettant la mise en oeuvre de plus de granulats pour augmenter les performances de neutralisation.

La figure 6 représente ainsi une cartouche de neutralisation 7 comportant une portion inférieure d'étuis 71 de forme cylindrique, semblable à la partie inférieure de l'étui 41 de la cartouche 4. Cette portion inférieure d'étui 71, qui peut par exemple être fabriquée par découpage d'un étui 41, peut avantageusement être fermée à son extrémité inférieure par le même bouchon 6, et comporter les mêmes bossages et plots que l'étui 41, permettant la fixation à la platine 11. Ainsi, la cartouche de neutralisation 7 peut avantageusement être assemblée à une pompe ou à un bac exactement de la même façon que la cartouche 4.

La partie supérieure de la cartouche de neutralisation 7 est constituée par une chambre 72 présentant des dimensions permettant à la cartouche 7 de contenir une plus grande quantité de granulats que la cartouche 4. Selon un mode de réalisation possible, l'assemblage entre la portion inférieure d'étuis 71 et la chambre 72 peut se faire par emboîtement permettant la rotation de la portion inférieure d'étuis 71 autour de son axe longitudinal, par rapport à la chambre 72. Dans ce mode de réalisation, qui permet dans certaines situations de faciliter l'assemblage à une pompe ou à un bac, un joint d'étanchéité 73 peut être prévu entre les deux portions de la cartouche. Selon d'autres modes de réalisation possibles, ces deux portions peuvent être par exemple collées, ou être fabriquées d'une seule pièce, comme le montre par exemple la figure 7.

La cartouche de neutralisation 7 comporte une ouverture d'entrée de condensat 74 latérale. Pour éviter la sortie de granulats par cette ouverture, elle peut être avantageusement bouchée par un bouchon 6 identique à celui bouchant l'ouverture de sortie de condensat, laissant passer les liquides mais pas les granulats.

Il est à noter que la forme de la chambre est indifférente pour réaliser l'invention. Elle peut ainsi former un cylindre de diamètre plus grand que celui de la portion inférieure d'étui, avoir une forme rectangulaire, ou par exemple former un tube enroulé en spirale. Cette forme doit cependant permettre l'écoulement des liquides qui y sont introduits vers le bas, et présenter des parois suffisamment inclinées pour éviter l'accumulation de boues dans la cartouche.

La cartouche de neutralisation 8 selon la variante représentée par la figure 7 comporte également une portion inférieure d'étui 81 fermée par un bouchon 6 et surmontée par une chambre 82. Cette chambre 82 présente une section rectangulaire et est fermée par un couvercle amovible étanche 84. Avantageusement, elle contient une pluralité de déflecteurs 86.

Ces déflecteurs 86, dont l'un est représenté par la figure 8, comportent un cadre 861 maintenant un plan incliné 862. Ces plans inclinés, dans la chambre 82, contraignent les liquides entrant dans la chambre par l'ouverture d'entrée 83 à effectuer un trajet plus long, en contact avec les granulats remplissant la chambre, avant d'atteindre l'ouverture de sortie de la cartouche 8. Les déflecteurs 86, qui peuvent être utilisés en nombre variable en fonction des dimensions de la chambre, permettent donc une neutralisation plus efficace. Pour éviter les dépôts de boues sur les plans inclinés, il est important que ceux-ci conservent une inclinaison suffisante, par exemple de l'ordre de 10° par rapport à l'horizontale.

Il est à noter que la cartouche 8 comprend une béquille 85 lui permettant de prendre appui de façon stable sur la platine dans laquelle elle est montée. Selon un mode de réalisation particulier, cette béquille peut être munie d'un système de centrage sur la platine pour empêcher la rotation de la cartouche 8 autour de la portion inférieure d'étui 81. Selon un autre mode de réalisation envisageable, une même chambre pourrait être associée à plusieurs parties inférieures d'appui engagées dans la même platine, pour permettre un meilleur débit ou une garantie supplémentaire contre le risque de bouchage de l'ouverture de sortie.

L'homme du métier pourra sans difficulté mettre en oeuvre d'autres variantes de la présente invention pour s'adapter à des situations particulières. Il pourra ainsi mettre en oeuvre des cartouches de formes variées, et des déflecteurs adaptés, par exemple des déflecteurs en forme d'hélice pour des chambres cylindriques, etc.

## Revendications

1. Dispositif de neutralisation de condensats acides, comprenant un bac (1) de collecte de condensats et une cartouche (4, 7, 8) renfermant un réactif de neutralisation des acides,
**caractérisé en ce que** ladite cartouche (4, 7, 8) présente une ouverture d'entrée (42, 74, 83) des condensats à son extrémité supérieure et une ouverture de sortie des condensats à son extrémité inférieure,
**en ce que** ladite cartouche est montée de façon amovible sur une paroi supérieure dudit bac (1), et est placée sensiblement verticalement dans ledit bac (1), de façon à permettre un écoulement gravitaire des condensats à travers ladite cartouche, ladite ouverture d'entrée pouvant être assemblée à une conduite d'arrivée des condensats,
ladite ouverture de sortie de ladite cartouche étant placée de façon qu'elle se trouve en dessous d'un niveau minimum (31) de liquide dans ledit bac (1),
et **en ce qu'**il comprend un dispositif de relevage (2) des condensats collectés dans ledit bac (1), comprenant un dispositif de pompage (2) et un système de commande déclenchant le dispositif de pompage lorsque le niveau de liquide dans ledit bac (1) atteint un niveau maximum (32) et l'arrêtant lorsque ledit niveau de liquide atteint ledit niveau minimum (31).

2. Dispositif de neutralisation de condensats selon la revendication 1, **caractérisé en ce qu'**au moins une partie des réactifs contenus dans ladite cartouche (4, 7, 8) est placée de façon à être en permanence en contact avec les condensats contenus dans le bac.

3. Dispositif de neutralisation de condensats selon l'une quelconque des revendications précédentes, **caractérisé en ce qu'**au moins une partie des réactifs contenus dans ladite cartouche (4, 7, 8) est située au-dessus dudit niveau maximum (32) de liquide dans ledit bac (1).

4. Dispositif de neutralisation de condensats acides selon l'une quelconque des revendications précédentes, **caractérisé en ce que** ledit dispositif de relevage (2) génère des mouvements de liquide dans ledit bac (1), de façon à contribuer au nettoyage de ladite ouverture de sortie de ladite cartouche (4, 7, 8) et/ou des réactifs situés à proximité de ladite ouverture de sortie.

5. Dispositif de neutralisation de condensats selon l'une quelconque des revendications précédentes, **caractérisé en ce que** ledit réactif contenu dans ladite cartouche (4, 7, 8) est formé de granulats (5, 51, 52) aptes à réagir avec les acides contenus dans le condensat pénétrant par ladite ouverture d'entrée (42, 74, 83) pour les neutraliser.

6. Dispositif de neutralisation de condensats selon la revendication 5, **caractérisé en ce que**, avant l'utilisation de la cartouche, la taille moyenne des granulats (52) situés dans une portion inférieure de ladite cartouche (4, 7, 8) est supérieure d'au moins 30 % à la taille moyenne des granulats (51) situés dans une partie supérieure de ladite cartouche (4, 7, 8).

7. Dispositif de neutralisation de condensats selon l'une quelconque des revendications précédentes, **caractérisé en ce que** ladite cartouche (4, 7, 8) est fabriquée au moins en partie en matériau transparent, de façon à permettre un contrôle visuel du réactif de neutralisation des acides qu'elle contient.

8. Dispositif de neutralisation de condensats selon l'une quelconque des revendications précédentes, **caractérisé en ce qu'**une partie de cartouche s'étendant au dessus du niveau de ladite paroi supérieure présente une section plus large que la partie de cartouche s'étendant en dessous de ladite paroi supérieure.

9. Dispositif de neutralisation de condensats selon l'une quelconque des revendications précédentes, **caractérisé en ce que** la quantité de réactif dans ladite cartouche (4, 7, 8) est telle que, avant utilisation, une partie du réactif s'étend au-dessus du niveau de ladite paroi supérieure.

10. Dispositif de neutralisation de condensats selon l'une quelconque des revendications précédentes, **caractérisé en ce que** ladite cartouche (4, 7, 8) comporte des éléments de support (43) venant en appui sur le fond dudit bac (1) et permettant de maintenir ladite ouverture de sortie à distance dudit fond.

11. Dispositif de neutralisation de condensats selon l'une quelconque des revendications précédentes, **caractérisé en ce que** ladite cartouche (8) comporte des moyens de déflection (86) augmentant le chemin à parcourir pour les condensats, en contact avec ledit réactif de neutralisation, entre ladite ouverture d'entrée (83) et ladite ouverture de sortie.

12. Dispositif de neutralisation de condensats selon l'une quelconque des revendications précédentes, **caractérisé en ce que** ladite cartouche (4, 7, 8) est configurée de façon à permettre l'écoulement gravitaire vers ladite ouverture de sortie de tous le liquide qui y pénètre par ladite ouverture d'entrée (42, 74, 83).

## Patentansprüche

1. Vorrichtung zur Neutralisierung von sauren Kondensaten, umfassend einen Behälter (1) zum Sammeln von Kondensaten und eine Patrone (4, 7, 8), die ein Reagens zur Neutralisierung der Säuren einschließt,
**dadurch gekennzeichnet, dass** die Patrone (4, 7, 8) eine Einlassöffnung (42, 74, 83) der Kondensate an ihrem oberen Ende und eine Auslassöffnung der Kondensate an ihrem unteren Ende aufweist,
dass die Patrone abnehmbar auf einer oberen Wand des Behälters (1) montiert und im Wesentlichen vertikal im Behälter (1) angeordnet ist, um ein Abfließen der Kondensate durch Schwerkraft durch die Patrone zu ermöglichen, wobei die Einlassöffnung mit einer Zuleitung der Kondensate verbunden sein kann,
wobei die Auslassöffnung der Patrone derart angeordnet ist, dass sie sich unter einem minimalen Flüssigkeitsniveau (31) im Behälter (1) befindet,
und dass sie eine Vorrichtung (2) zum Heben der gesammelten Kondensate in den Behälter (1) umfasst, umfassend eine Pumpvorrichtung (2) und ein Steuersystem, das die Pumpvorrichtung auslöst, wenn das Flüssigkeitsniveau in dem Behälter (1) ein maximales Niveau (32) erreicht, und diese anhält, wenn das Flüssigkeitsniveau das minimale Niveau (31) erreicht.

2. Vorrichtung zur Neutralisierung von Kondensaten nach Anspruch 1, **dadurch gekennzeichnet, dass** mindestens ein Teil der in der Patrone (4, 7, 8) enthaltenen Reagenzien derart angeordnet ist, dass er ständig mit den im Behälter enthaltenen Kondensaten in Kontakt ist.

3. Vorrichtung zur Neutralisierung von Kondensaten nach einem der vorhergehenden Ansprüche, **dadurch gekennzeichnet, dass** mindestens ein Teil der in der Patrone (4, 7, 8) enthaltenen Reagenzien über dem maximalen Flüssigkeitsniveau (32) im Behälter (1) angeordnet ist.

4. Vorrichtung zur Neutralisierung von sauren Kondensaten nach einem der vorhergehenden Ansprüche, **dadurch gekennzeichnet, dass** die Hubvorrichtung (2) Flüssigkeitsbewegungen in dem Behälter (1) erzeugt, um zur Reinigung der Auslassöffnung der Patrone (4, 7, 8) und/oder der Reagenzien, die sich in der Nähe der Auslassöffnung befinden, beizutragen.

5. Vorrichtung zur Neutralisierung von Kondensaten nach einem der vorhergehenden Ansprüche, **dadurch gekennzeichnet, dass** das in der Patrone (4, 7, 8) enthaltene Reagens von Granulat (5, 51, 52) gebildet ist, das geeignet ist, mit den Säuren zu reagieren, die in dem Kondensat enthalten sind, das durch die Einlassöffnung (42, 74, 83) eindringt, um diese zu neutralisieren.

6. Vorrichtung zur Neutralisierung von Kondensaten nach Anspruch 5, **dadurch gekennzeichnet, dass** vor der Verwendung der Patrone die durchschnittliche Größe des Granulats (52), das sich in einem unteren Abschnitt der Patrone (4, 7, 8) befindet, um mindestens 30 % größer als die durchschnittliche Größe des Granulats (51), das sich in einem oberen Teil der Patrone (4, 7, 8) befindet, ist.

7. Vorrichtung zur Neutralisierung von Kondensaten nach einem der vorhergehenden Ansprüche, **dadurch gekennzeichnet, dass** die Patrone (4, 7, 8) zumindest teilweise aus einem transparenten Material hergestellt ist, um eine Sichtkontrolle des Reagens zur Neutralisierung der Säuren, das sie enthält, zu ermöglichen.

8. Vorrichtung zur Neutralisierung von Kondensaten nach einem der vorhergehenden Ansprüche, **dadurch gekennzeichnet, dass** ein Patronenteil, der sich über dem Niveau der oberen Wand erstreckt, einen breiteren Querschnitt als der Patronenteil, der sich unter der oberen Wand erstreckt, aufweist.

9. Vorrichtung zur Neutralisierung von Kondensaten nach einem der vorhergehenden Ansprüche, **dadurch gekennzeichnet, dass** die Reagensmenge in der Patrone (4, 7, 8) derart ist, dass sich vor der Verwendung ein Teil des Reagens über dem Niveau der oberen Wand erstreckt.

10. Vorrichtung zur Neutralisierung von Kondensaten nach einem der vorhergehenden Ansprüche, **dadurch gekennzeichnet, dass** die Patrone (4, 7, 8) Stützelemente (43) umfasst, die am Boden des Behälters (1) aufliegen und es ermöglichen, die Auslassöffnung in einem Abstand zum Boden zu halten.

11. Vorrichtung zur Neutralisierung von Kondensaten nach einem der vorhergehenden Ansprüche, **dadurch gekennzeichnet, dass** die Patrone (8) Ablenkmittel (86) umfasst, die den für die mit dem Neutralisierungsreagens in Kontakt befindlichen Kondensate zu durchlaufenden Weg zwischen der Einlassöffnung (83) und der Auslassöffnung vergrößern.

12. Vorrichtung zur Neutralisierung von Kondensaten nach einem der vorhergehenden Ansprüche, **dadurch gekennzeichnet, dass** die Patrone (4, 7, 8) derart ausgeführt ist, dass das Abfließen der gesamten Flüssigkeit, die durch die Einlassöffnung (42, 74, 83) eindringt, durch Schwerkraft zu der Auslassöffnung möglich ist.

## Claims

1. Device for neutralizing acid condensates, comprising a tub (1) for collecting condensates and a cartridge (4, 7, 8) enclosing a reagent for neutralizing acids
**characterized in that** said cartridge (4, 7, 8) has an inlet aperture (42, 74, 83) for the inlet of the condensates at its upper end and an outlet aperture for the outlet of the condensates at its lower end, **in that** said cartridge is mounted detachably on an upper wall of said tub (1), and is placed substantially vertically in said tub (1), so as to enable a gravitational flow of the condensates through said cartridge, said inlet aperture being adapted to be assembled to a conduit for the inlet of the condensates,
said outlet aperture of said cartridge being placed so that it is situated beneath a minimum level (31)of liquid in said tub (1),
and **in that** it comprises a device (2) for lifting the condensates collected in said tub (1), comprising a pumping device (2) and a command system activating the pumping device when the level of liquid in said tub (1) reaches a maximum level (32) and stopping it when said level of liquid reaches said minimum level.

2. Device for neutralizing condensates according to claim 1, **characterized in that** at least a part of the reagents contained in said cartridge (4, 7, 8) is placed so as to be permanently in contact with the condensates contained in the tub.

3. Device for neutralizing condensates according to any one of the above claims, **characterized in that** at least a part of the reagents contained in said cartridge (4, 7, 8) is situated above a maximum level (32) of liquid in said tub (1, 91).

4. Device for neutralizing condensates according to any one of the above claims, **characterized in that** said device (2) for lifting generates movements of the liquid in said tub (1) so as to contribute to the cleaning of said outlet aperture of said cartridge (4, 7, 8) and/or movements of the reagents situated in proximity to said outlet aperture.

5. Device for neutralizing condensates according to any one of the above claims, **characterized in that** said reagent contained in said cartridge (4, 7, 8) is formed by aggregates (5, 51, 52) capable of reacting with the acids contained in the condensates penetrating by said inlet aperture (42, 74, 83) to neutralize them.

6. Device for neutralizing condensates according to claim 5, **characterized in that**, before the use of the cartridge, the average size of the aggregates (52), situated in a lower portion of said cartridge (4, 7, 8), is greater by at least 30% than the average size of the aggregates (51) situated in an upper part of said cartridge (4, 7, 8).

7. Device for neutralizing condensates according to any one of the above claims, **characterized in that** said cartridge (4, 7, 8) is fabricated at least in part out of transparent material so as to enable a visual checking of the reagent for neutralizing the acids that it contains.

8. Device for neutralizing condensates according to any one of the above claims, **characterized in that** a cartridge part extending above the level of said upper wall has a wider section than the cartridge part extending beneath said upper wall.

9. Device for neutralizing condensates according to any one of the above claims, **characterized in that** the quantity of reagent in said cartridge (4, 7, 8) is such that, before use, a part of the reagent extends above the level of said upper wall.

10. Device for neutralizing condensates according to any one of the above claims, **characterized in that** said cartridge (4, 7, 8) comprises support elements (43) that rest on the bottom of said tub (1, 91) and enable said outlet aperture to be held at a distance from said bottom.

11. Device for neutralizing condensates according to any one of the above claims, **characterized in that** said cartridge (8) comprises baffle means (86) that increase the path to be travelled for the condensates in contact with said reagent for neutralizing, between said inlet aperture (83) and said outlet aperture.

12. Device for neutralizing condensates according to any one of the above claims, **characterized in that** said cartridge (4, 7, 8) is configured so as to enable the gravitational flow towards said outlet aperture of all the liquid that penetrates therein by said inlet aperture (42, 74, 83).
